# EUROPÄISCHE PATENTSCHRIFT

(11) **EP 1 444 114 B1**
(45) Veröffentlichungstag und Bekanntmachung des Hinweises auf die Patenterteilung: **06.06.2007**
(21) Anmeldenummer: 02776680.7
(22) Anmeldetag: 18.09.2002
(51) Int. Cl.: B60R 19/48, G01S 7/03

(54) **HALTERUNG FÜR EIN JUSTIERBARES GEHÄUSE**
POSITIONING DEVICE FOR ADJUSTABLE HOUSING
DISPOSITIF DE POSITIONNEMENT POUR BOITIER REGLABLE

(30) Priorität: 02.11.2001 DE 10154080
(43) Veröffentlichungstag der Anmeldung: 11.08.2004
(73) Patentinhaber: ROBERT BOSCH GMBH, 70442 Stuttgart (DE)
(72) Erfinder: ZEIHER, Juergen, 70499 Stuttgart (DE); KLAAS, Thomas, 71679 Asperg (DE); KOERBER, Sabine, 71638 Ludwigsburg (DE); REICHERT, Andreas, 71720 Oberstenfeld (DE)
(86) Internationale Anmeldenummer: PCT/DE2002/003490
(87) Internationale Veröffentlichungsnummer: WO 2003/039917

(56) Entgegenhaltungen:
- WO-A-00/73103
- WO-A-99/13525
- DE-A- 19 757 005
- DE-A- 19 924 056

## Beschreibung

### Stand der Technik

Die Erfindung betrifft eine Halterung für ein justierbares Gehäuse, insbesondere für das Gehäuse eines Radarsensors, das außen an einem Kraftfahrzeug angebracht ist, nach dem Oberbegriff des Hauptanspruchs.

In der Regel wird solch ein Radarsensor mit einer Halterung außen an einem Fahrzeug angeschraubt. Dieser Radarsensor kann beispielsweise ein Baustein eines Abstandswarnsystems sein, bei dem ständig Informationen über den Abstand und/oder die Relativgeschwindigkeit des Fahrzeuges zu anderen Fahrzeugen und zu den Straßengegebenheiten verarbeitet werden. Es ist hierbei notwendig, den Radarsensor sehr genau auf die Fahrzeuglängsachse auszurichten, wodurch aufgrund der zum Teil erheblichen Fahrzeugtoleranzen im Bereich der Anbaustelle eine Justage des Sensors nach dem Einbau ins Kraftfahrzeug in horizontaler und vertikaler Richtung notwendig ist.

Es ist beispielsweise in der DE 199 24 055 A1 beschrieben, dass der Radarsensor nach der Montage durch manuelles Drehen von zwei Justageschrauben mit Hilfe eines Umlenkgetriebes von oben, unten oder seitlich justiert wird. Die Schwierigkeit besteht darin, einen Einbauraum für den Radarsensor zu finden, der einerseits ausreichend Platz bietet und die Hochfrequenzanforderungen erfüllt und andererseits eine einfache und somit kostengünstige Justage des Radarsensors am Ende des Fertigungsprozesses ermöglicht.

Bei den bekannten Justiervorrichtungen werden in der Regel mit Kunststoff umspritzte Stahlhalter oder Kunststoff-Zwischenhalter kombiniert mit Aluminiumhaltern für die Fahrzeugmontage verwendet. Die Justage erfolgt dann durch Einstellschrauben in zwei Achsen, wobei als Feststellmomente die Reibung zwischen den Kunststoffdomen und den Schrauben verwendet wird. Die Befestigung des Radarsensors erfolgt hier dann über sogenannte Kugelpfannen, die das Drehen und Kippen des Sensors ermöglichen.

Für diese zuvor beschriebenen bekannten Anordnungen werden sehr aufwendige und teure Werkzeuge benötigt, da jeweils ein Stanz- und Biegewerkzeug und ein Werkzeug für die Umspritzung der Halterung benötigt wird. Bei der Verwendung eines Kunststoffzwischenhalters wird darüber hinaus noch ein Werkzeug für einen Stahl- oder Aluminiurnhalter benötigt. Weiterhin ist bei den bekannten Anordnungen für jedes Fahrzeug, an das die Halterung angebracht wird, eine fahrzeugspezifische Auslegung der Werkzeuge notwendig.

### Vorteile der Erfindung

Eine Halterung für ein justierbares Gehäuse der eingangs genannten Art, bei dem die Lage eines Gehäuses, z.B- für einen Radarsensor, an einem Montageort mit mindestens einer Justierschraube in mindestens einem Freiheitsgrad veränderbar ist veränderbar sein soll, ist in vorteilhafter Weise dadurch weitergebildet, dass die mindestens eine Justierschraube am Montageort in einem Befestigungsdom dreh- und kippbar gehalten ist.

Dies wird auf einfache Weise dadurch realisiert, dass der jeweilige Befestigungsdom am Montageort in einer entsprechenden Ausnehmung dreh- und zugsicher einrastbar ist. Der jeweilige Befestigungsdom kann dabei auch in einer Zwischenhalterung zwischen dem Gehäuse und dem Montageort angebracht sein.

In besonders vorteilhafter Weise sind am jeweiligen Befestigungsdom Hinterschnitte und radiale Überlappungen angebracht, mit denen der jeweilige Befestigungsdom verdrehsicher in die Ausnehmung am Montageort oder am Zwischenhalter anbringbar ist. Hierbei sind die Befestigungsdome vorzugsweise aus Kunststoff hergestellt.

Für eine optimale Justage in horizontaler und vertikaler Richtung ist das Gehäuse mit drei Justierschrauben am Montageort oder am Zwischenhalter angebracht, wobei die Justierschrauben gemäß einer vorteilhaften Ausführungsform am Gehäuse in Blindnieten gehalten sind, in die die Justierschrauben mit ihrem Gewinde selbsthemmend einschraubbar sind. Das notwendige Haltemoment für die Schrauben lässt sich daher leicht realisieren, da die Blindnieten eine ausreichende Selbsthemmung bzw. Selbstsicherung gewährleisten um eine Dejustierung zu verhindern.

Das Gehäuse ist bei einer besonders vorteilhaften Anwendung Bestandteil eines Radarsensors, der außen an einem Bauteil eines Kraftfahrzeuges justierbar angebracht ist.

Die erfindungsgemäße Halterung ist besonders dadurch vorteilhaft, dass hier einfach herzustellende Kunststoffdome verwendbar sind, die direkt beispielsweise am Frontend eines Kraftfahrzeuges oder an einem relativ einfach gestalteten Zwischenhalter befestigt werden können. Diese Kunststoffdome lassen sich mit einer leicht zu gestaltenden Geometrie am Montageort einfach verrasten und sichern und gewährleisten auf einfache Weise eine drehbare Lagerung einschließlich des Kippens der Justierschrauben, was bei den bisher üblichen Halterungen nur durch eine aufwendige Kugelpfanne realisierbar war.

Das vorgeschlagenen Halterungslconzept lässt sich daher relativ kostengünstig realisieren und ist auf einfache Weise flexibel an die jeweilige Einbausituation anpassbar.

### Zeichnung

Ausführungsbeispiele einer erfindungsgemäßen Halterung für das Gehäuse eines Radarsensors an einem Kraftfahrzeug werden anhand der Zeichnung erläutert. Es zeigen:
Figur 1 eine Ansicht eines Radarsensors mit einer justierbaren Halterung zur Befestigung an einem Montageort,
Figur 2 eine Detailansicht eines Kunststoffdoms zur Aufnahme von Justierschrauben zur Befestigung am Montageort in der Vormontagestellung,
Figur 3 eine Detailansicht eines Kunststoffdoms zur Aufnahme von Justierschrauben zur Befestigung am Montageort in der Endmontagestellung,
Figur 4 Figur 1 eine Ansicht eines Radarsensors mit einer alternativen justierbaren Halterung hinter dem Radarsensor,
Figur 5 ein gegenüber der Figur 4 abgewandeltes Ausführungsbeispiel eines Kunststoffdomes,
Figur 6 ein zweites gegenüber der Figur 4 abgewandeltes Ausführungsbeispiel eines Kunststoffdomes und
Figur 7 ein drittes gegenüber der Figur 4 abgewandeltes vereinfachtes Ausführungsbeispiel eines Kunststoffdomes ohne Verdrehsicherung.

### Beschreibung der Ausführungsbeispiele

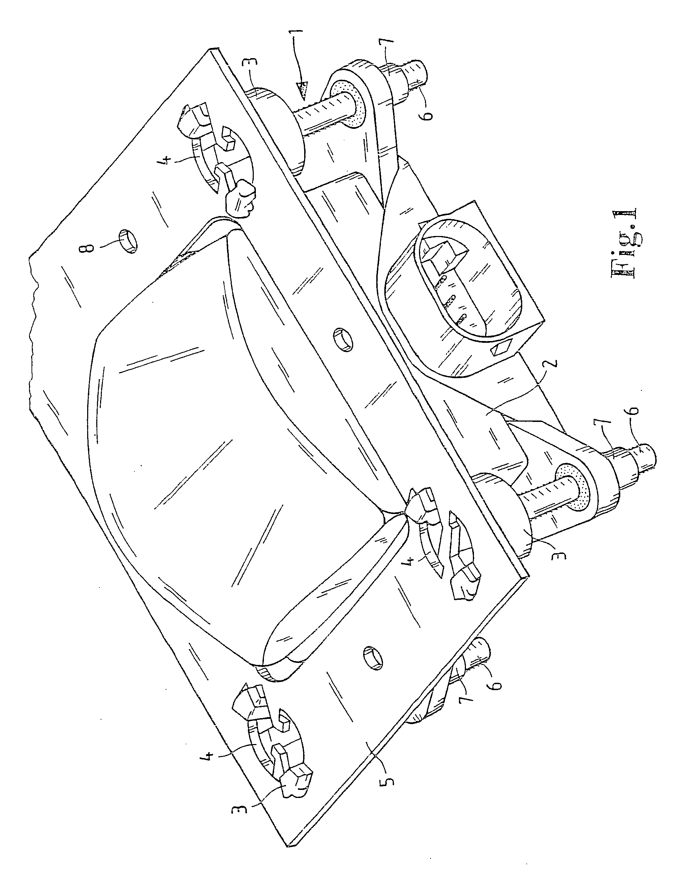

Aus Figur 1 ist in einer perspektivischen Darstellung eine Halterung 1 für einen als Radarsensor aufgebauten Entfernungssensor 2 ersichtlich, wie er im Prinzip aus dem eingangs erwähnten Stand der Technik bekannt ist. Der Entfernungssensor 2 ist zur Befestigung an einem geeigneten Montageort an einem Kraftfahrzeug, z.B. an der vorderen Stoßstange, mittels der Halterung 1 justierbar befestigt.

Als wesentliche Verbindungselemente der Halterung 1 sind hier drei Kunststoffdome 3 vorhanden, die in eine entsprechende Ausnehmung 4 am Montageort des Bauteils des Kraftfahrzeugs oder, wie hier dargestellt, an einem Zwischenhalter 5 eingeclipst sind. In die Kunststoffdome 3 sind mit einem hier nicht ersichtlichen Kugelkopf versehene Einstell- bzw. Justierschrauben 6 eingedrückt. Die Justierschrauben 6 sind über Blindniete 7 mit dem Gehäuse des Sensors 2 mechanisch verbunden, wobei die Justierschrauben 6 durch eine Selbsthemmung des Gewindes im jeweiligen Blindniet 7 gesichert sind.

Zur Justage des Sensors 2 am Montageort über die Halterung 1 kann nun mit einem geeigneten Werkzeug, z.B. einem hier nicht gezeigten Elektroschrauber, der an Bohrungen 8 gehalten werden kann, eine Verdrehung der Justierschrauben 6 und damit eine geeignete horizontale und vertikale Lageveränderung des Sensors 2 bewirkt werden.

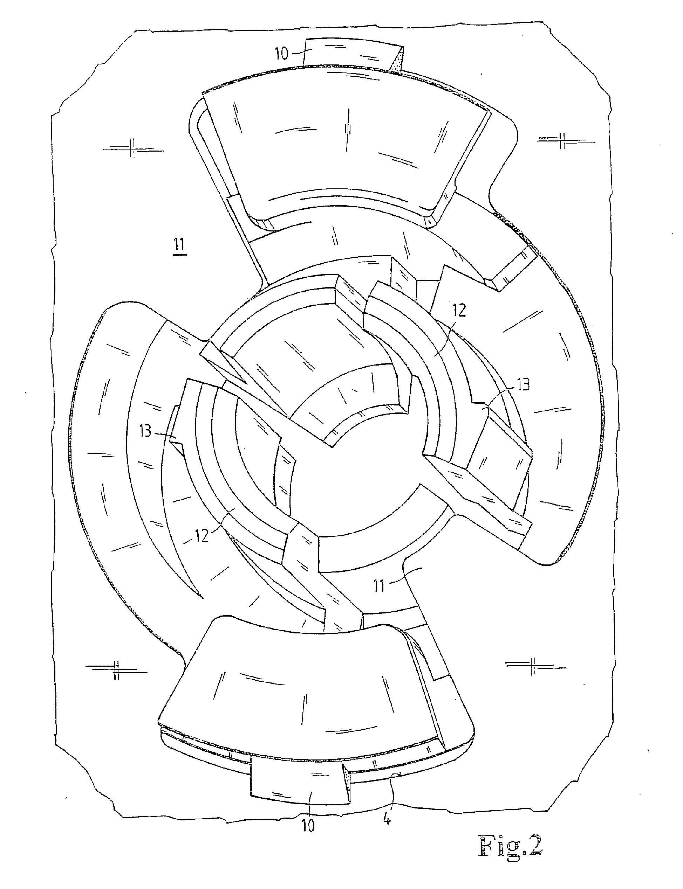

In Figur 2 ist ein erstes Ausführungsbeispiel einer sicheren Verbindung der Kunststoffdome 3 an dem Zwischenhalter 5 ersichtlich. Nach dem Einclipsen der Kunststoffdome 3 in die Ausnehmung 4 können Überlappungen 10 nach einer Verdrehung in Verbindung mit geeigneten Geometrien 11 der Ausnehmung 4 für einen sicheren Halt senkrecht zum Zwischenhalter 5 sorgen. In Drehrichtung sorgen Federelemente 12 und Hinterschnitte 13 für einen sicheren Halt und somit zur Verhinderung einer Dejustage.

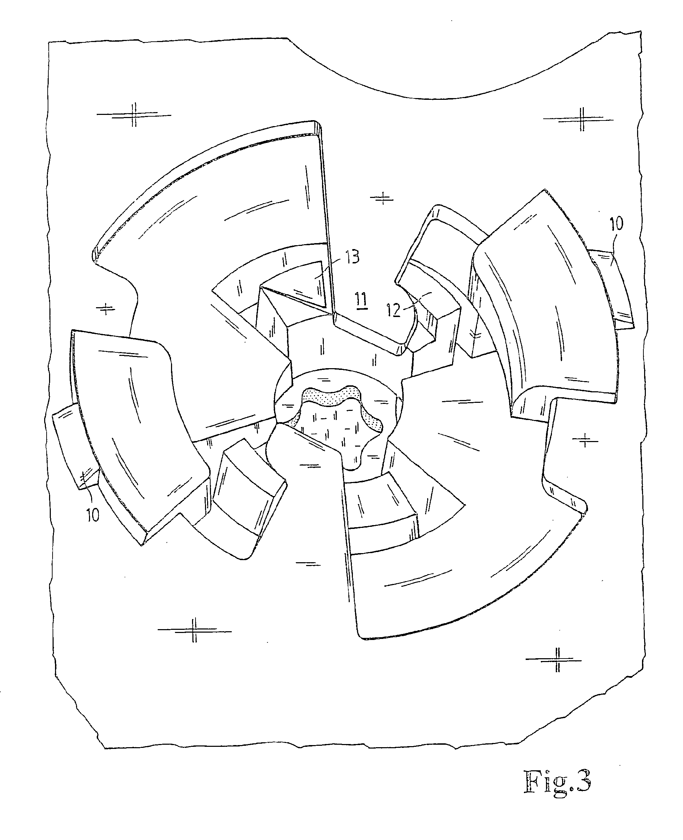

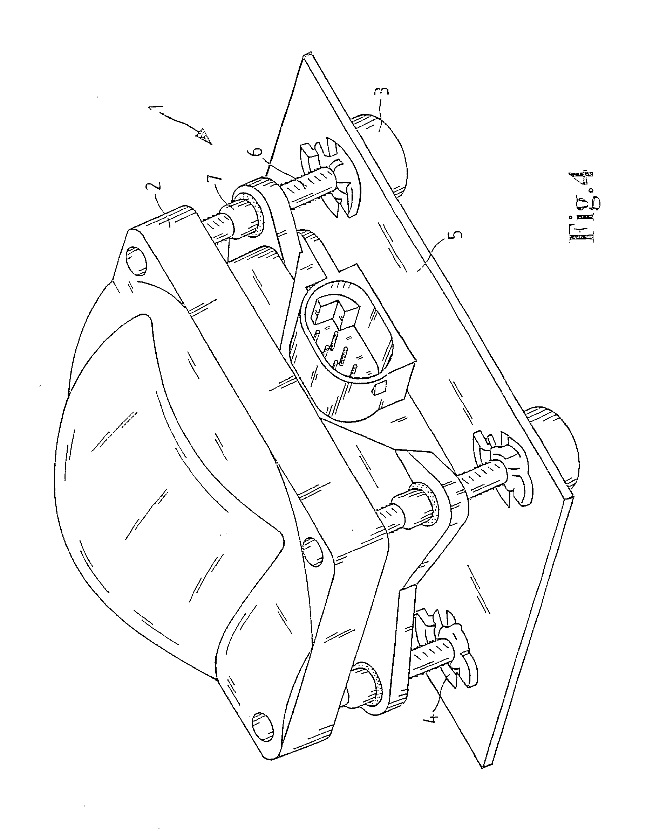

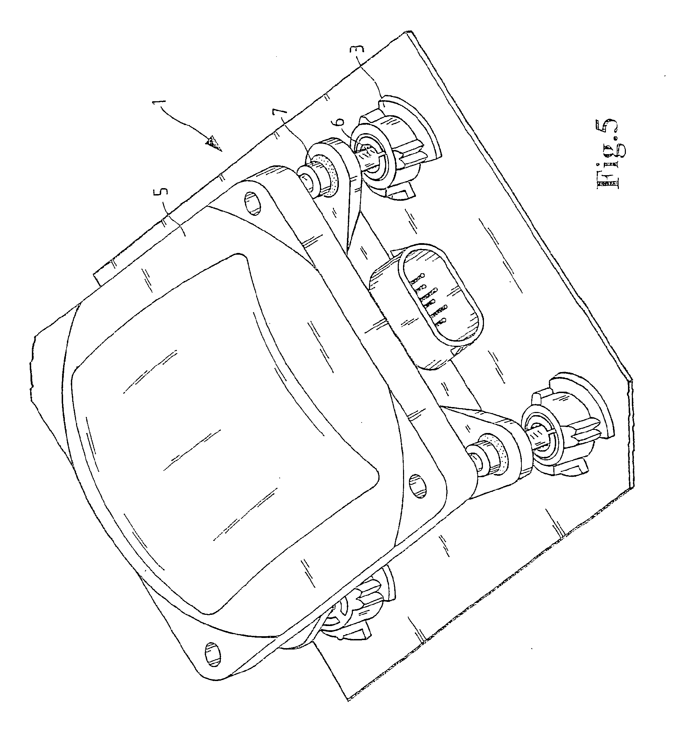

Ein geometrisch abgewandelter aber im wesentlichen gleich wie bei der Figur 2 wirkender Aufbau der Federelemente 12 und des Hinterschnitts 13 ist in Figur 3 gezeigt. Bei der Darstellung nach Figur 4 ist der Zwischenhalter 5 hinter dem Sensorgehäuse 2 angeordnet und mit entsprechend angepassten Kunststoffdomen 3 versehen. Auch aus Figur 5 ist eine solche Anordnung ersichtlich, wobei hier die Rückseite der anhand der Figur 2 beschriebenen Kunststoffdome 3 gezeigt ist.

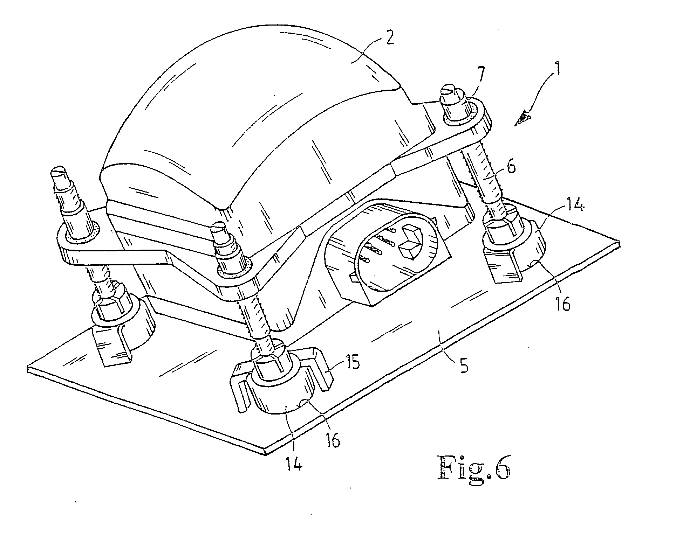

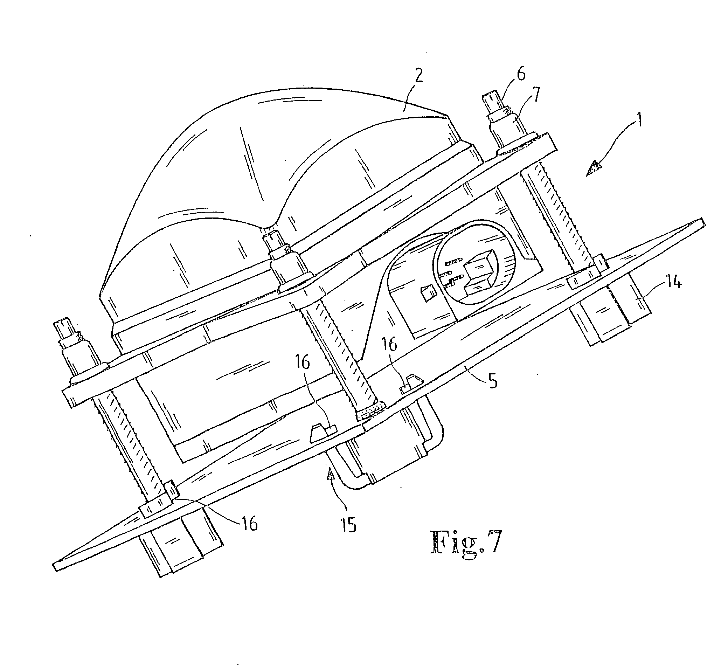

In Figur 6 und in Figur 7 sind vereinfachte Ausführungen von Kunststoffdomen 14 in etwas verschiedenen Ansichten und Abwandlungen zu entnehmen, die einen einfachen Clipsmechanismus 15 aufweisen. Bei der Figur 6 wird der Clipsmechanismus von der Seite des Sensors 2 in entsprechende Ausnehmungen 16 eingeclipst, so dass hier ein sicherer Halt in Achsrichtung der Justierschrauben 6 aber keine Sicherung in Drehrichtung vorhanden ist. Beim Ausführungsbeispiel nach der Figur 7 wird der Clipsmechanismus 15 von der, dem Sensor 2 gegenüberliegenden Seite an die Zwischenhalterung 5 angefügt.

## Patentansprüche

1. Halterung für ein justierbares Gehäuse, mit der
- die Lage des Gehäuses (2) an einem Montageort mit mindestens einer Justierschraube (6) in mindestens einem Freiheitsgrad veränderbar ist und über die das Gehäuse (2) am Montageort gehalten ist, **dadurch gekennzeichnet, dass**
- die mindestens eine Justierschraube (6) am Montageort in einem Befestigungsdom (3;14) dreh- und kippbar gehalten ist.

2. Halterung nach Anspruch 1, **dadurch gekennzeichnet, dass**
- der jeweilige Befestigungsdom (3;14) am Montageort in einer entsprechenden Ausnehmung (4;15) dreh- und zugsicher einrastbar ist.

3. Halterung nach Anspruch 1 oder 2, **dadurch gekennzeichnet, dass**
- der jeweilige Befestigungsdom (3;14) in einer Zwischenhalterung (5) zwischen dem Gehäuse (2) und dem Montageort angebracht ist.

4. Halterung nach einem der vorhergehenden Ansprüche, **dadurch gekennzeichnet, dass**
- am jeweiligen Befestigungsdom (3) Hinterschnitte (13) und radiale Überlappungen (12) angebracht sind, mit denen der jeweilige Befestigungsdom (3) verdrehsicher in die Ausnehmung (4) am Montageort oder am Zwischenhalter (5) anbringbar ist.

5. Halterung nach einem der vorhergehenden Ansprüche, **dadurch gekennzeichnet, dass**
- die Befestigungsdome Kunststoffdome (3;14) sind.

6. Halterung nach einem der vorhergehenden Ansprüche, **dadurch gekennzeichnet, dass**
- das Gehäuse (2) mit drei Justierschrauben (6) am Montageort oder am Zwischenhalter (5) anbringbar ist.

7. Halterung nach einem der vorhergehenden Ansprüche, **dadurch gekennzeichnet, dass**
- die Justierschrauben (6) am Gehäuse (2) in Blindnieten (7) gehalten sind, in die die Justierschrauben (6) mit ihrem Gewinde selbsthemmend einschraubbar sind.

8. Halterung nach einem der vorhergehenden Ansprüche, **dadurch gekennzeichnet, dass**
- das Gehäuse Bestandteil eines Radarsensors (2) ist, der außen an einem Bauteil eines Kraftfahrzeuges justierbar angebracht ist.

## Claims

1. Holder for an adjustable housing, by means of which
- the position of the housing (2) at an installation location can be varied in at least one degree of freedom by means of at least one adjusting screw (6), and by means of which the housing (2) is held at the installation location, **characterized in that**
- the at least one adjusting screw (6) is held at the installation location in a mounting dome (3; 14) such that it can be rotated or tilted.

2. Holder according to Claim 1, **characterized in that**
- the respective mounting dome (3; 14) can be latched in an appropriate recess (4; 15) at the installation location, such that it is secure against rotation and pulling.

3. Holder according to Claim 1 or 2, **characterized in that**
- the respective mounting dome (3; 14) is fitted in an intermediate holder (5) between the housing (2) and the installation location.

4. Holder according to one of the preceding claims, **characterized in that**
- undercuts (13) and radial overlaps (12) are fitted to the respective mounting dome (3), by means of which the respective mounting dome (3) can be fitted into the recess (4) at the installation location or on the intermediate holder (5) such that it cannot rotate.

5. Holder according to one of the preceding claims, **characterized in that**
- the mounting domes are plastic domes (3; 14).

6. Holder according to one of the preceding claims, **characterized in that**
- the housing (2) can be fitted to the installation location or to the intermediate holder (5) by means of three adjusting screws (6).

7. Holder according to one of the preceding claims, **characterized in that**
- the adjusting screws (6) are held on the housing (2) in blind rivets (7) into which the threads of the adjusting screws (6) can be screwed in a self-locking manner.

8. Holder according to one of the preceding claims, **characterized in that**
- the housing is a component of a radar sensor (2) which is fitted adjustably to the outside of a component of a motor vehicle.

## Revendications

1. Dispositif de positionnement pour un boîtier ajustable par lequel la position du boîtier (2) en un emplacement de montage peut être modifiée avec au moins un degré de liberté, au moyen d'une vis d'ajustage (6) qui assure le maintien du boîtier (2) à cet emplacement
**caractérisé en ce que**
l'au moins une vis d'ajustage (6) est maintenue à l'emplacement de montage dans un dôme de fixation (3 ; 14) avec possibilité de rotation et de basculement.

2. Dispositif de positionnement selon la revendication 1,
**caractérisé en ce que**
chaque dôme de fixation (3 ; 14) peut, à l'emplacement de montage, être bloqué avec sécurisation vis-à-vis de la rotation et de la traction, dans un évidement correspondant (4 ; 15).

3. Dispositif de positionnement selon la revendication 1 ou 2,
**caractérisé en ce que**
chaque dôme de fixation (3 ; 14) est monté sur un support intermédiaire (5) placé entre le boîtier (12) et l'emplacement de montage.

4. Dispositif de positionnement selon une des revendications précédentes,
**caractérisé en ce que**
chaque dôme de fixation (3) présente des contredépouilles (13) et des recouvrements radiaux (12) par lesquels il peut être monté avec sécurisation vis-à-vis de la rotation dans l'évidement (4) à l'emplacement de montage ou sur le support intermédiaire (5).

5. Dispositif de positionnement selon une des revendications précédentes,
**caractérisé en ce que**
les dômes de fixation (3 ; 14) sont en matière plastique.

6. Dispositif de positionnement selon une des revendications précédentes,
**caractérisé en ce que**
le boîtier (2) peut être monté par trois vis d'ajustage (6) sur l'emplacement de montage ou sur le support intermédiaire (5).

7. Dispositif de positionnement selon une des revendications précédentes,
**caractérisé en ce que**
les vis d'ajustage (6) sont maintenues sur le boîtier (2) dans des rivets borgnes (7), où elles peuvent être fixées par leur filetage autoblocant.

8. Dispositif de positionnement selon une des revendications précédentes,
**caractérisé en ce que**
le boîtier (2) est un composant de radar qui peut être monté en étant ajusté extérieurement sur un composant d'un véhicule automobile.
